Europäisches Patentamt

European Patent Office

Office européen des brevets

(19)

(11) Veröffentlichungsnummer: **0 399 516**
**A1**

# (12) EUROPÄISCHE PATENTANMELDUNG

(21) Anmeldenummer: 90109842.6

(22) Anmeldetag: 23.05.90

(51) Int. Cl.⁵: **B65B 61/00, B29C 51/26**

(30) Priorität: 24.05.89 DE 3916977
03.08.89 DE 3925747

(43) Veröffentlichungstag der Anmeldung:
28.11.90 Patentblatt 90/48

(84) Benannte Vertragsstaaten:
DE FR IT

(71) Anmelder: **MULTIVAC SEPP HAGGENMÜLLER
KG**
**Bahnhofstrasse 4**
**D-8941 Wolfertschwenden(DE)**

(72) Erfinder: **Sparakowski, Helmut**
**Bahnhofstrasse 90**
**D-7951 Tannheim(DE)**
Erfinder: **Franz, Dolf**
**Schmelzerweg 13a**
**D-8950 Kaufbeuren(DE)**
Erfinder: **Medwed, Emmerich**
**Bergstrasse 3**
**D-8941 Wolfertschwenden(DE)**

(74) Vertreter: **Prüfer, Lutz H., Dipl.-Phys.**
**Harthauser Strasse 25d**
**D-8000 München 90(DE)**

(54) Verpackungsmaschine.

(57) Es wird eine Verpackungsmaschine mit einem
Maschinenrahmen (1) und einer Einrichtung (2, 3)
zum Ergreifen und Hindurchführen einer Folienbahn
(4) durch eine Maschine und deren Arbeitsstationen
hindurch geschaffen. In einer eingangsseitig angeordneten Formstation wird die Folie erwärmt und
verformt. Nach dem Erwärmen tritt beim Abkühlen
ein Schrumpfen auf. Damit diese Schrumpfung insbesondere auch bei schwerden Folien nicht zu
Nachteilen führt, wird ein Werkzeug (9) vorgesehen,
welches an der Folienbahn Bereiche anbringt, an
denen die Folienbahn beim Schrumpfen nach der
erfolgten Erwärmung stärker ausgedehnt bzw. dehnbar ist als außerhalb dieser Bereiche.

Fig. 2

EP 0 399 516 A1

## VERPACKUNGSMASCHINE

Die Erfindung betrifft eine Verpackungsmaschine nach dem Oberbegriff des Patentanspruches 1 und ein Verfahren nach dem Oberbegriff des Patentanspruches 8.

Eine derartige Verpackungsmaschine ist beispielsweise aus der DE-PS 31 09 814 bekannt. Die Folienbahn wird in einer Tiefziehstation zu Behälterunterteilen verformt. Zu diesem Zweck wird sie vor dem Verformen erwärmt. Nach dem Verformen kühlt sich die Folie ab. Bei einer Reihe von Folienarten findet nach dem Verformen und Abkühlen ein Schrumpfen statt. Dadurch kann sich der Abstand einander benachbarter Packungen zueinander bzw. der Ort nicht mittensymmetrisch angeordneter Packungen ändern, was bei der Weiterverarbeitung in nachgeordneten Arbeitsstationen nachteilig ist. Insbesondere dann, wenn es sich um dickere und schwerere Folien, wie beispielsweise Polypropylenfolien, handelt, führt diese Schrumpfung dazu, daß erhebliche Kräfte auf die seitlich angreifenden Ketten wirken. Wird die Maschine aus irgendwelchen Gründen angehalten, kann die durch die Schrumpfung erzeugte Verspannung sogar dazu führen, daß es Schwierigkeiten beim Wiederanlaufen gibt.

Aus dem DE-GM 72 02 789.5 ist eine Vorrichtung zum Herstellen von streifenförmigen Mehrfachpackungen bekannt. In einer Formstation wird eine vorerwärmte Kunststoffolie so verformt, daß mehrere nebeneinanderliegende taschenförmige Behältnisse gebildet sind, in die in einer nachfolgenden Füllstrecke zu verpackende Gegenstände einlegbar sind. An die Füllstrecke anschließend folgt eine Siegelstation. Unmittelbar vor dieser wird eine Aluminiumfolie als Deckfolie zugeführt. Die beiden Folien werden in der Siegelstation miteinander versiegelt. Die untere Kunststoffolie und die Aluminiumfolie haben ein unterschiedliches Ausdehnungsverhalten. Zum Ausgleich ist in der Siegelstation eine Stanzvorrichtung vorgesehen, die auf der Unterseite der Unterfolie von der Siegelflächenebene der Siegelplatte nach oben hervorstehende Schneidkanten aufweist, mit denen die Unterfolie ganz oder teilweise im Bereich der zwischen benachbarten Packungen liegenden Stege getrennt wird. Die so gleichzeitig mit den Siegeln angebrachten durchgehenden Schwächungslinien oder Kerben trennen die bei der Erwärmung entstehenden Spannungsphasen in dem Unterteil einer Packung.

Aufgabe der Erfindung ist es, die Verpackungsmaschine so auszubilden, daß durch das Schrumpfen der erwärmten und verformten Unterfolie im Anschluß an die Formstation eine Spannung auftritt, die erhebliche Kräfte auf die seitlich angreifenden Ketten ausübt bzw. den genauen Rapport der vorgeformten Behältnisse verändert.

Diese Aufgabe wird durch die im Patentanspruch 1 gekennzeichnete Verpackungsmaschine bzw. durch das in Patentanspruch 8 gekennzeichnete Verfahren gelöst.

Aufgabe der Erfindung ist es, die Verpackungsmaschine so auszubilden, daß für die materialbedingte Schrumpfung ein Ausgleich geschaffen wird derart, daß die durch die Schrumpfung sonst bedingten Nachteile vermieden werden.

Diese Aufgabe wird durch die in Patentanspruch 1 gekennzeichnete Verpackungsmaschine gelöst.

Weiterbildungen der Erfindung sind in den Unteransprüchen gekennzeichnet.

Weitere Merkmale und Zweckmäßigkeiten der Erfindung ergeben sich aus der Beschreibung von Ausführungsbeispielen anhand der Figuren. Von den Figuren zeigen:

Fig. 1 eine Seitenansicht der Verpackungsmaschine, bei der die seitliche Abdeckung zur besseren Illustration weggelassen ist;

Fig. 2 einen Schnitt entlang der Linie II/II in Fig. 1, wobei eine Hälfte in Ruheposition und eine Hälfte in Arbeitsstellung gezeigt ist;

Fig. 3 a) bis c) eine Draufsicht auf drei Ausführungsformen einer mit der erfindungsgemäß ausgebildeten Verpackungsmaschine behandelten Folienbahn;

Fig. 4 a) bis f) Detail-Schnitt-Darstellungen des in Fig. 2 gezeigten Werkzeuges;

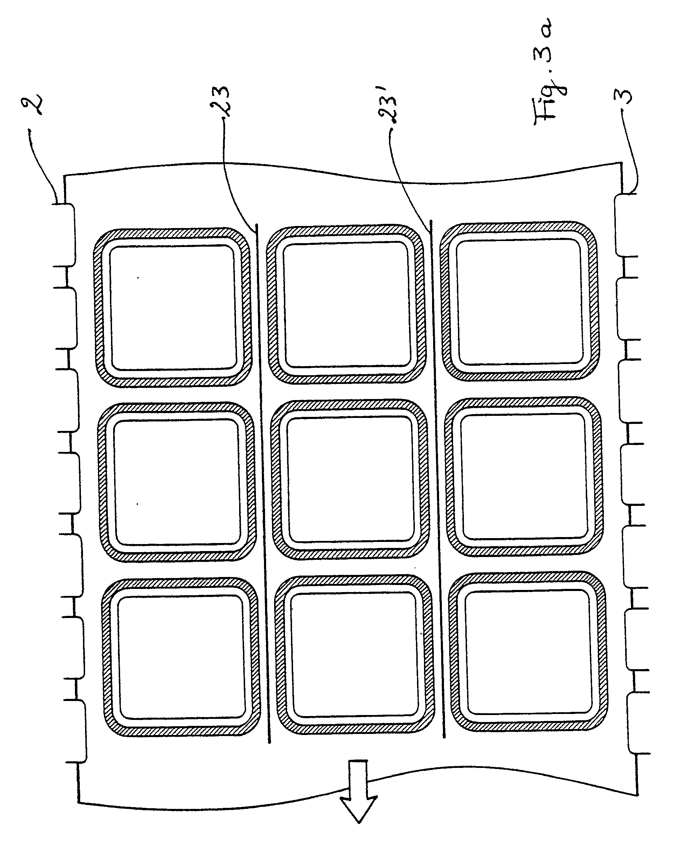

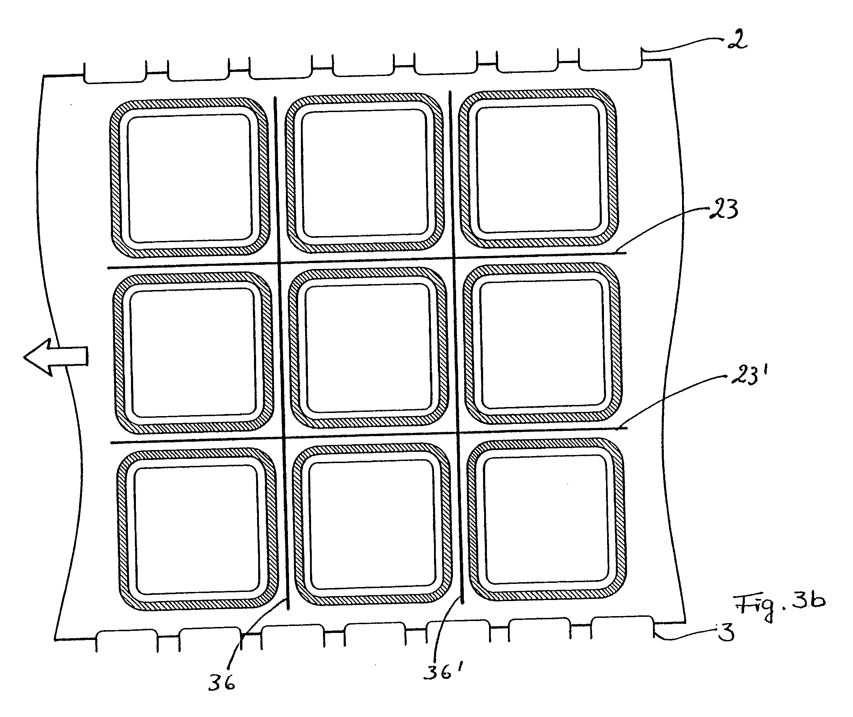

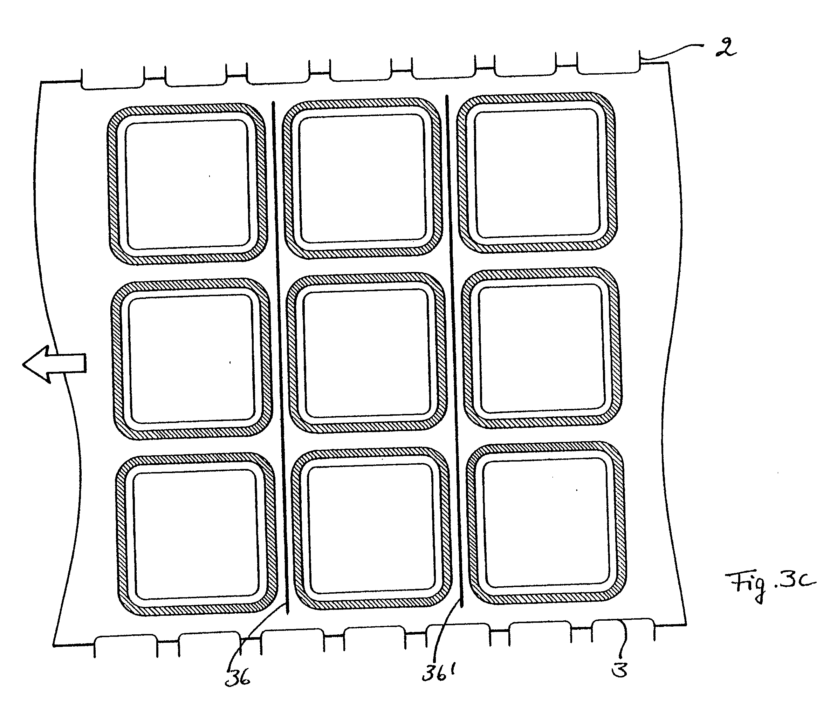

Die Verpackungsmaschine weist einen Maschinenrahmen 1 mit zwei in einem Abstand voneinander angeordneten seitlichen Wangen auf. Auf jeder der Seiten wird eine in Fig. 3 angedeutete Endloskette 2, 3 mit Greifern geführt, die eine eingangsseitig von einer Folienrolle abgewickelte Folienbahn 4 ergreifen und in Vorschubrichtung vom eingangsseitigen Ende zu dem gegenüberliegenden ausgangsseitigen Ende und durch verschiedene Arbeitsstationen hindurchführen. Nahe der Eingangsseite ist eine Formstation 5 zum Erwärmen und Tiefziehen der Folienbahn in Behälter 6 angeordnet. Die so geformten Behälter werden befüllt und dann mit einer Oberfolie 7 abgedeckt und in einer Evakuier-und Versiegelungsstation 8 versiegelt.

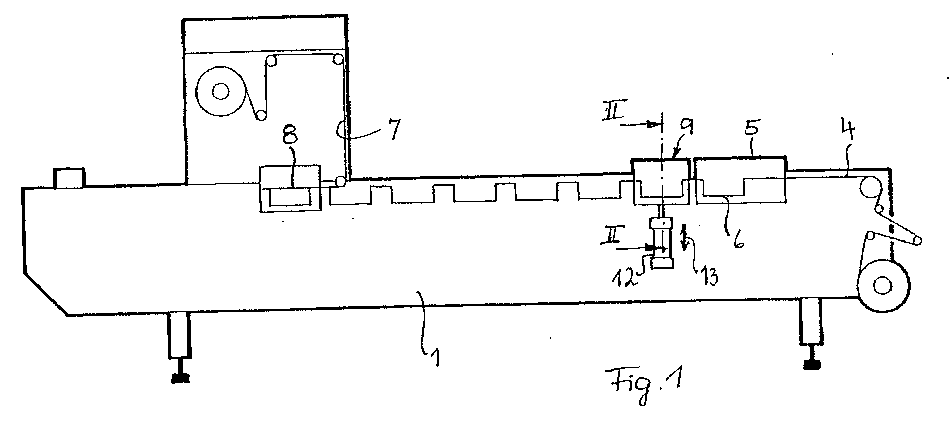

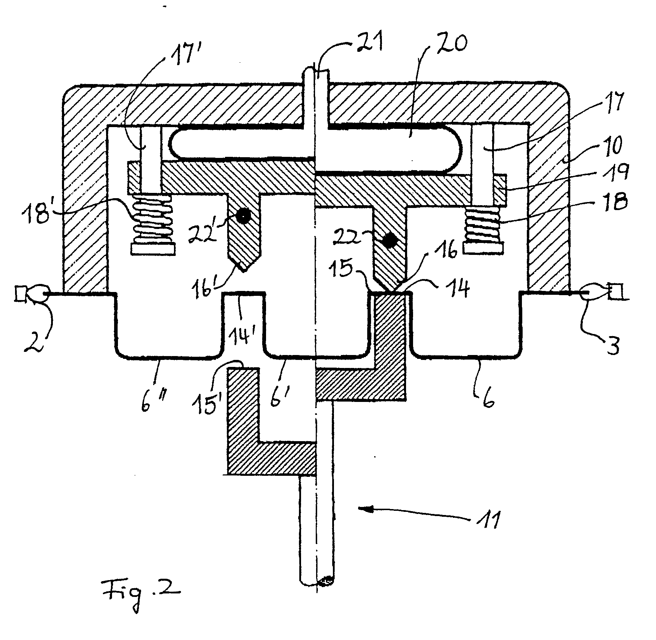

Wie am besten aus Fig. 1 ersichtlich ist, ist in Vorschubrichtung gesehen unmittelbar hinter der Formstation 5 eine Profilierstation 9 vorgesehen. Wie am besten aus Fig. 2 ersichtlich ist, weist die Profilierstation ein mit dem Rahmen verbundenes Oberteil 10 und ein relativ dazu bewegbares Unterteil 11 auf. Das Unterwerkzeug wird über eine mit dem Maschinenrahmen verbundene Kolbenzylindereinrichtung 12 in Richtung des Pfeiles 13 in die geschlossene bzw. in die zurückgezogene geöffnete Stellung bewegt.

Das Unterteil 11 weist an den die jeweiligen Behälter 6, 6′, 6″ angrenzenden Stegen 14, 14′ entsprechenden Stellen Widerlager 15, 15′ auf, die in der die geschlossene Position der Profilierstation zeigenden rechten Hälfte der Fig. 2 soweit nach oben gefahren ist, daß die Folie mit dem Steg direkt auf dem Widerlager aufliegt. Das Oberteil 10 weist an den entsprechenden Stellen Profilierbalken 16, 16′ auf. Diese sind auf in dem Oberteil befestigten Bolzen 17, 17′ gleitbar befestigt und mit Federn 18, 18′ in die von der Folienbahn weg gerichtete Stellung nach oben vorgespannt. Zwischen dem Gehäuse des Oberteils 10 und dem die Profilierbalken tragenden Profilierwerkzeug 19 ist ein Druckschlauch 20 angeordnet, der über eine angedeutete Verbindung 21 mit einer Druckluftquelle verbindbar ist. Das Profilierwerkzeug bzw. die Profilierbalken sind über schematisch angedeutete Heizungen 22, 22′ auf eine vorbestimmte Temperatur aufheizbar.

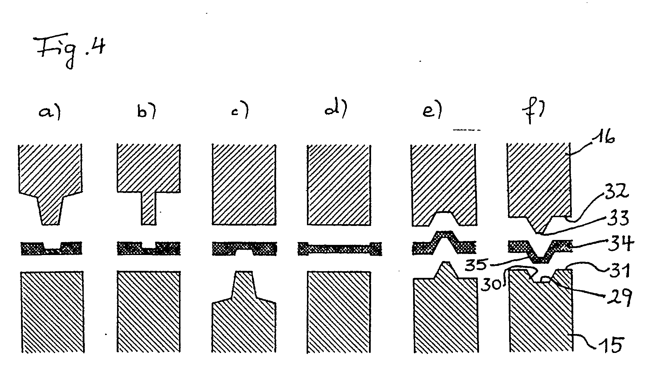

In der Ruhestellung ist, wie aus der linken Hälfte von Fig. 2 ersichtlich ist, das Unterteil mit dem Widerlager abgesenkt, so daß die Folie mit den geformten Behältern weiterbewegbar ist. Der Druckschlauch ist belüftet, so daß das Profilierwerkzeug mit Profilierbalken in die gezeigte zurückgezogene Stellung gedrückt ist. Im Betrieb ist das Unterteil in die in der rechten Hälfte von Fig. 2 gezeigte geschlossene Stellung bewegt. Das Widerlager ist bis zum Foliensteg hochgefahren, so daß die Folie auf dem Widerlager aufliegt. Über die Leitung 21 wird Druckluft in den Druckschlauch geführt, so daß das Profilierwerkzeug und damit der Profilierbalken in Kontakt mit der Folie bewegt wird. Über die Heizung 22 ist der Profilierbalken auf eine solche Temperatur vorgeheizt, daß durch das Aufdrücken auf der Folie bzw. Quetschen derselben die in Fig. 4 gezeigten Profilierungen 23a bis 23f entstehen. Diese partielle Verformung der Folie hat zur Folge, daß an diesen Stellen eine gewisse Verbreiterung bzw. Vergrößerung der Folienoberfläche erfolgt, die im Prozentbereich - also etwa 1 - 4 % der vorherigen Abmessung - liegt. Beim späteren Schrumpfen dient diese Vergrößerung als Ausgleich. Darüber hinaus wird der gequetschte Bereich gegebenenfalls bevorzugt gedehnt.

In dem oben beschriebenen Ausführungsbeispiel ist der Profilierbalken vorgeheizt. Alternativ kann stattdessen oder zusätzlich das Widerlager beheizt sein.

Wie aus Fig. 4 ersichtlich ist, kann die Form des Profilierbalkens je nach gewünschter Breite des profilierten Bereiches und auch in Abhängigkeit von der vorhandenen Breite zwischen zwei Packungsrändern oder an der Seite eines Packungsrandes unterschiedlich gewählt werden.

Als besonders vorteilhaft hat sich die Ausbildung der Profilierbalken in der in Figuren 4 e) und 4 f) gezeigten Form erwiesen. Bei der in Fig. 4 f) gezeigten Ausführungsform weist das Widerlager eine U-förmige Rinne aus einem sich im wesentlichen parallel zur Folienebene erstreckenden ebenen Grund 29 und zwei sich daran seitlich anschließenden nach außen divergent verlaufenden Seitenwandungen 30 und an jeder Seite der Rinne ebene Bereiche 31 auf. Der zugehörige Profilierbalken 16 ist komplementär dazu ausgebildet und weist ebene Randbereiche 32 und einen in die U-förmige Rinne hineinreichenden erhabenen Teil 33 auf, der einen zum Grund 29 parallelen mittleren Abschnitt und zwei zu den seitlichen Wänden 30 im wesentlichen parallelen Seitenwände aufweist. Die U-förmige Rinne ist gegenüber dem erhabenen Teil 33 um so viel breiter ausgebildet, daß beim Zusammenwirken eine Folie 34 zwischen die beiden Teile paßt und in der in Fig. 4 f) gezeigten Form geprägt wird. Die Ausführungsform nach Fig. 4 e) unterscheidet sich nur dadurch, daß die Oberflächen von Widerlager und Profilierbalken vertauscht sind. Bei dieser Form wird der Ausgleich insbesondere dadurch erreicht, daß Material in die seitlichen Flanken 35 des U-förmig geprägten Folienteiles fließt. Dieses Material bewirkt dann beim Schrumpfen einen Ausgleich.

Die Schrumpfung kann je nach Material in einer Richtung Quer zur Vorschubrichtung oder längs zur Vorschubrichtung oder in beiden Richtungen erfolgen. Zum Ausgleich einer Schrumpfung in Querrichtung wird, wie in Fig. 3 a) gezeigt ist, zwischen jeweils zwei benachbarten Packungen und gewunschtenfalls auch seitlich von diesen zwischen Packungen und den Greifern der Endlosketten 2, 3 eine sich in Längsrichtung durchgehend erstreckende Profilierung 23, 23′ erzeugt. Diese erstreckt sich vorzugsweise linienförmig durchgehend zwischen den Packungen, um einen Ausgleich in allen Zonen zu erreichen. Bei einer Schrumpfung in Längs- und Querrichtung werden, wie in Fig. 3 b) gezeigt ist, entsprechende Prägelinien 23, 23′, 36, 36′ in Längs- und Querrichtung zwischen jeweils benachbarten Packungsreihen geprägt, die wiederum jeweils durchgehend ausgebildet sind, um einen gleichmäßigen Ausgleich zu ergeben. Bei einer Folie, die lediglich in Längsrichtung schrumpft, werden wie in Fig. 3 c) gezeigt ist, Prägungen 36, 36′ in Querrichtung zwischen einander benachbarten Packungen vorgesehen, die wiederum durchgehend sind, um einen Ausgleich in allen Packungszonen zu erreichen.

In dem oben beschriebenen Ausführungsbeispiel ist die Profilierstation 9 als eigene Station unmittelbar hinter der Formstation ausgebildet. Es ist aber auch möglich, die Profiliereinrichtung in die Formstation 5 zu integrieren, so daß die Profilierung der Folie schon beim Beheizen derselben oder während des Formens oder unmittelbar nach dem Formen erfolgt. Bevorzugt erfolgt die Profilierung allerdings nach Abschluß des Formvorganges.

stimmten Bereich derart, daß eine Oberflächenvergrößerung in diesem Bereich stattfindet, erfolgt.

**Ansprüche**

1. Verpackungsmaschine mit einem Maschinenrahmen (1) und einer Einrichtung (2, 3) zum seitlichen Ergreifen und Hindurchführen einer Folienbahn (4) in einer Vorschubrichtung von einer Einlaufseite zu einer Auslaufseite und einer Station (5) zum Erwärmen und Verformen der Folie und einer in Vorschubrichtung nachfolgenden Versiegelungsstation (8),
dadurch gekennzeichnet, daß ein Werkzeug (9) zum Quetschen der Folie derart, daß eine Vergrößerung der Folienoberfläche in wenigstens einer Richtung entsteht, vorgesehen ist.

2. Verpackungsmaschine nach Anspruch 1,
dadurch gekennzeichnet, daß das Werkzeug ein Widerlager (15) und einen damit zusammenwirkenden heizbaren Profilierbalken (16) aufweist.

3. Verpackungsmaschine nach einem der Ansprüche 1 oder 2,
dadurch gekennzeichnet, daß der Profilierbalken (16) sich im wesentlichen parallel zur Vorschubrichtung erstreckt.

4. Verpackungsmaschine nach einem der Ansprüche 1 bis 3,
dadurch gekennzeichnet, daß sich der Profilierbalken (16) im wesentlichen quer zur Vorschubrichtung erstreckt.

5. Verpackungsmaschine nach einem der Ansprüche 2 bis 4,
dadurch gekennzeichnet, daß Widerlager (15) und Profilierbalken (16) so ausgebildet sind, daß die Bereiche einen im wesentlichen U-förmigen Querschnitt aufweisen.

6. Verpackungsmaschine nach einem der Ansprüche 2 bis 4,
dadurch gekennzeichnet, daß Widerlager (15) und Profilierbalken (16) so ausgebildet sind, daß die Bereiche einen im wesentlichen V-förmigen Querschnitt aufweisen.

7. Verpackungsmaschine nach einem der Ansprüche 1 bis 6,
dadurch gekennzeichnet, daß das Werkzeug (9) unmittelbar der Station (5) zum Erwärmen und Verformen nachgeordnet ist.

8. Verpackungsverfahren, bei dem aus einer seitlich ergriffenen und geführten Materialbahn nach Erwärmen derselben Behältnisse geformt, diese gefüllt, mit einer Deckfolie abgedeckt und in einer Siegelstation versiegelt werden,
dadurch gekennzeichnet, daß unmittelbar nach dem Verformen ein Quetschen in einem vorbe-

Fig. 1

Fig. 2

Fig. 3a

EP 0 399 516 A1

Fig. 3b

EP 0 399 516 A1

Fig.3c

36    36'    3

EP 0 399 516 A1

Fig.4

a)    b)    c)    d)    e)    f)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JP-A-5 173 070  (MITSUBISHI MONS) <br> * Zusammenfassung; figures 1-3 * <br> --- | 1,2,4,6 ,8 | B 65 B   61/00 <br> B 29 C   51/26 |
| A | DE-A-2 065 740  (INTERCAN) <br> * Seite 4, letzter Absatz - Seite 5, Absatz 5; figures 1,2 * <br> ----- | 1 | |

RECHERCHIERTE
SACHGEBIETE (Int. Cl.5)

B 65 B
B 29 C

Der vorliegende Recherchenbericht wurde für alle Patentansprüche erstellt

| Recherchenort | Abschlußdatum der Recherche | Prüfer |
|---|---|---|
| DEN HAAG | 24-07-1990 | CLAEYS H.C.M. |